# NEUE EUROPÄISCHE PATENTSCHRIFT

(11) **EP 1 334 903 B2**
(45) Veröffentlichungstag und Bekanntmachung des Hinweises auf die Entscheidung über den Einspruch: **07.03.2012**
(45) Hinweis auf die Patenterteilung: 26.11.2008
(21) Anmeldenummer: 03000971.6
(22) Anmeldetag: 17.01.2003
(51) Int. Cl.: B62M 25/02

(54) **Freigabemechanismus für Triggerschalter**
Release mechanism for gear change
Dispositif de déblocage pour changement de vitesse

(30) Priorität: 08.02.2002 DE 10205278
(43) Veröffentlichungstag der Anmeldung: 13.08.2003
(73) Patentinhaber: SRAM Deutschland GmbH, 97404 Schweinfurt (DE)
(72) Erfinder: Wessel, Robert, 93059 Regensburg (DE)
(74) Vertreter: Prechtel, Jörg

(56) Entgegenhaltungen:
- EP-A2- 0 785 128
- EP-A2- 1 134 156
- EP-A2- 1 134 158
- WO-A-94/18061
- DE-A1- 4 413 610
- DE-U1- 9 015 515
- FR-A1- 2 701 917
- GB-A- 645 912
- GB-A- 2 169 065
- US-A- 5 921 138
- US-B1- 6 502 477

## Beschreibung

Die vorliegende Erfindung betrifft einen Freigabemechanismus zur stufenweisen Freigabe des Schaltzuges einer Fahrradgangschaltung gemäß dem Oberbegriff von Anspruch 1.

Das Dokument FR 2 701 917 offenbart einen Freigabemechanismus zur Freigabe eines Zugmittels zur Steuerung von Fahrradgetrieben, umfassend eine Seilspule zum Aufwickeln des vorgespannten Schaltzuges, eine Auslösevorrichtung zum Fixieren bzw. Freigeben der durch den Schaltzug vorgespannten Sellspule in Abwickelrichtungund ein Betätigungselement zum Einleiten des Auslösevorganges sowie ein Gehäuseteil zur Aufnahme und Führung der Bauteile,
wobei die Auslösevorrichtung im wesentlichen aus einer mit der Seilspule verbundenen Zahnscheibe und einem mit gegenüberliegenden Klinken ausgestatteten Drehteil gebildet wird und
wobei die Klinken während des Auslösevorganges wechselweise am Umfang der Zahnscheibe in Halte- und Fangzähne der Zahnscheibe eingreifen.

Das Gebrauchsmuster DE 9015515 zeigt einen Schrittschalter zur Steuerung von Fahrradgetrieben, dessen Hebel mit einem Klinkenpaar ausgestattet ist. Die Klinken greifen in eine Zahnscheibe, die mit einer Seilspule zum Aufwickeln des Schaltzuges verbunden ist. Bei Betätigung des Hebels in Aufziehrichtung bzw. Freigaberichtung wird der jeweilige Gang eingelegt und damit der entsprechend zugeordnete Schaltweg durch Auf- bzw. Abwickeln des Schaltzuges am Umfang der Seilspule realisiert. Der Schalthebel kehrt nach erfolgter Betätigung, egal in welche Richtung, immer in seine Bereitschaftsstellung zurück. Zum Halten der Seilspule in der jeweils eingeschalteten Position sind Friktions- oder Rasteinrichtungen vorgesehen, die im Gehäuse des Schalters angeordnet sind und mit der Seilspule bzw. der Zahnscheibe zusammenwirken. Die Klinken sind am Hebel in Bezug auf das Gehäuse derart angeordnet, dass beim Einrasten einer Klinke in die Zahnscheibe die jeweils andere Klinke durch eine Aushebevorrichtung außerhalb des jeweiligen Wirkbereiches der Zahnscheibe fixiert und somit außer Funktion gesetzt wird. Die aktuelle Position der Seilspule wird durch eine federbeaufschlagte Rasteinrichtung gehalten, die allerdings nur bis zu einer bestimmten Haltekraft wirksam bleibt und dann möglicherweise die vom Schaltzug vorgespannte Seilspule unkontrolliert durchrutschen läßt. Während des Schaltvorganges, wenn der Schalter in Freigaberichtung betätigt wird, wird die Haltekraft der Rasteinrichtung überwunden. Hierbei wird die vom Schaltzug vorgespannte Seilspule bis zur nächsten Halteposition weiter gedreht und der entsprechende Schaltweg freigegeben. Gelegentlich kommt es bei Schaltvorgängen in Freigaberichtung, aufgrund der kraftschlüssigen Rasteinrichtung zum Überspringen der anvisierten Gangstellung.

Ziel der Erfindung ist es, mit dem hier vorgeschlagenen Freigabemechanismus, gegenüber dem aufgezeigten Stand der Technik, einen funktionssicheren Freigabeund Haltevorgang zu erreichen. Dabei soll die gewählte Gangstufe formschlüssig fixiert werden.

Im wesentlichen besteht ein solcher Freigabemechanismus aus einer Seilspule, die drehfest mit einer Zahnscheibe verbunden ist und einem mit Halte- und Fangklinken ausgestatteten Halteelement, das beim Freigabevorgang wechselweise in die Zahnkontur eingreift und so eine schrittweise Freigabe des federvorgespannten Seilzuges ermöglicht.

Ein Schaltvorgang in Freigaberichtung erfolgt in zwei Abschnitten und wird durch die Betätigung des Auslösehebels eingeleitet. Hierdurch wird die Halteklinke außer Eingriff gebracht, so daß sich die Seilspule soweit verdrehen kann, bis die Fangklinke an einem entsprechenden Zahn der Zahnscheibe anliegt. Kehrt der federvorgespannte Auslösehebel in seine Ausgangslage zurück, so gibt die Fangklinke die Zahnscheibe frei, die Seilspule dreht sich aufgrund der anstehenden Seilzugspannung weiter, bis wieder die Halteklinke an einem entsprechenden Zahn der Zahnscheibe anliegt.

Die Aufgabe der Erfindung ist es nun, einen Freigabemechanismus zur schrittweisen Freigabe des Schaltzuges zu schaffen, der mit einfachen und wenigen Bauteilen einen funktionssicheren Freigabe- und Haltevorgang sowie eine formschlüssige Fixierung des Schaltzuges in der entsprechenden Gangstellung gewährleistet.

Die Lösung der Aufgabe ist im Anspruch, beschrieben, weitere Ausgestaltungen werden in den Unteransprüchen aufgezeigt.

Erfindungsgemäß wird vorgeschlagen, den schrittweisen Auslösevorgang im wesentlichen durch das Zusammenwirken eines linear bewegten Schiebeteiles mit einer Zahnscheibe, die mit der Seilspule drehfest verbunden ist, zu bewerkstelligen. Diese Zahnscheibe ist mit Halte- und Fangzähnen ausgestattet, die am Umfang gegenüberliegend angeordnet sind.

Das Schiebeteil umgreift die Zahnscheibe und verfügt über mindestens einer starren Halte- und einer starren Fangklinke, die wechselweise je nach momentaner Position des Schiebeteils, in die Halte- oder Fangzähne eingreift. In der Ruhestellung befindet sich stets die Halteklinke im Eingriff und fixiert formschlüssig die aktuelle Schaltstellung bzw. wirkt einer Verdrehung der Seilspule entgegen. Wird das Schiebeteil über ein Betätigungselement aus der Ruhestellung heraus bewegt, so erlaubt die Verschiebung der Halteklinke eine Verdrehung der Zahnscheibe bzw. der durch den Schaltzug vorgespannten Seilspule, bis nun die ebenfalls verschobene Fangklinke in die Fangverzahnung eintaucht und ein weiteres Verdrehen verhindert. Wird das Betätigungselement entlastet, dann kehrt das federvorgespannte Schiebeteil wieder in seine Ausgangslage zurück. Dabei gelangt die Fangklinke wieder aus dem Bereich der Fangzähne und die Zahnscheibe wird weiter gedreht bis die nunmehr in die Halteverzahnung eingreifende Halteklinke erneut die Zahnscheibe arretiert und den Freigabevorgang beendet. Der für einen Gangwechsel erforderliche Schaltweg wird somit in zwei Etappen erreicht, zum einen durch das Verdrehen der Zahnscheibe bis zum Eingriff der Fangklinke und zum anderen durch das Verdrehen der Zahnscheibe bis zum Eingriff der Halteklinke.

Die Haltezähne und die Halteklinken haben im Gegensatz zu den Fangzähnen und Fangklinken eine ausgeprägte, aufeinander abgestimmte Sägezahnkontur. Die steile Flanke sorgt für eine sichere formschlüssige Fixierung der Zahnscheibe in den Schaltpausen. Die flache Flanke unterstützt den Ausweichvorgang des Haltezahnes bei einem Schaltvorgang in Aufziehrichtung.

Die lineare Führung des Schiebeteils erfolgt am Gehäuseteil, das auch die Achse der Zahnscheibe bzw. der Seilspule aufnimmt, mittels Langlöcher und Führungsbolzen. Die geführte Bewegung des Schiebeteils bzw. der Freigabevorgang verläuft sehr leichtgängig. Zur Erhöhung der Freigabekräfte wird erfindungsgemäß, die stets an der Seilspule und damit auch an der Zahnscheibe anliegende und in Freigaberichtung wirkende Schaltzugspannung genutzt. Hierzu ist die Kontur des in der Nähe der Halteklinke gelegenen Langloches stufenförmig oder stark konvex ausgebildet. Über diese Kontur wird das Schiebeteil, die Halteklinke und damit auch der entsprechende Haltezahn geringfügig in Aufziehrichtung bewegt, wodurch sich, entsprechend dem Konturverlauf, die für den Freigabevorgang erforderliche Betätigungskraft erhöht.

Das Schiebeteil wird beim Freigabevorgang manuell über ein Betätigungselement aus der Ruhestellung, hierbei ist die Halteklinke im Eingriff, zur Zwischenstellung, hierbei ist die Fangklinke im Eingriff, verschoben. Das Betätigungselement kann eine Taste sein, die direkt auf das Schiebeteil wirkt und zusammen mit dem Schiebeteil am Gehäuseteil geführt wird. Schiebeteil und Betätigungsteil können sogar fest miteinander verbunden sein oder ein gemeinsames Bauteil bilden. Vorzugsweise wird das Betätigungselement als Schwenkhebel ausgebildet. Die Schwenkachse wird im Gehäuseteil geführt und verläuft im wesentlichen entweder in bzw. parallel zur Zahnscheibenebene oder ist senkrecht zu ihr angeordnet. Zum Erzielen einer besseren Ergonomie kann die Schwenkachse auch leicht geneigt zur Zahnscheibenebene angeordnet werden. Zur Umformung der Schwenkbewegung des Betätigungselementes in eine Linearbewegung des Schiebeteils, ist eine Übertragungskontur am Schiebeteil und Betätigungselement vorgesehen. Die Länge des Hebels und der Abstand der Übertragungskontur von der Drehachse ergeben das wirksame Hebelverhältnis und können auf die erforderlichen bzw. erwünschten Betätigungskräfte abgestimmt werden. Damit sich das Betätigungselement bei einem Schaltvorgang in Aufziehrichtung nicht bewegt, wird es unabhängig von der momentanen Position des Schiebeteils von einer Feder, die sich am Gehäuseteil abstützt, in seiner Grundstellung gehalten.

### Kurzbeschreibung der Zeichnung

Anhand von Darstellungen wird ein Ausführungsbeispiel zur weiteren Erläuterung der Erfindungsmerkmale gezeigt:
- Fig. 1: zeigt den Freigabemechanismus in der Grundstellung
- Fig. 2: zeigt den Freigabemechanismus in der Fangstellung
- Fig. 3: zeigt eine Explosionsdarstellung mit den wesentlichen Komponenten
- Fig. 4: zeigt den Freigabemechanismus in der Draufsicht

### Beschreibung des bevorzugten Ausführungsbeispiels

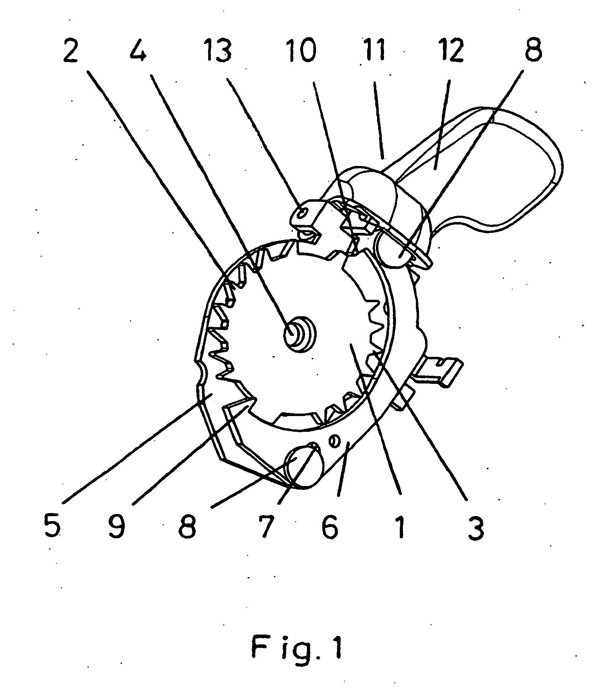

In Fig. 1 wird die Anordnung der im wesentlichen am Auslösevorgang beteiligten Bauteile ohne Seilspule in der Grundstellung gezeigt. Die Zahnscheibe 1 trägt am Umfang die Haltezähne 2 und die Fangzähne 3. Haltezähne 2 und Fangzähne 3 liegen sich gegenüber und haben unterschiedliche Zahnkonturen. Die Haltezähne 2 haben eine ausgeprägte Sägezahnkontur mit einer steilen und einer flachen Flanke. In der Mitte der Zahnscheibe befindet sich eine Bohrung 4 zur Aufnahme einer zentralen Achse, die im Gehäuseteil 5 geführt wird. Das Schiebeteil 6 verfügt über zwei Langlochführungen 7 und wird mit zwei Führungsbolzen 8 am Gehäuseteil 5 verschiebbar angelenkt. Das Schiebeteil 6 umgreift die Zahnscheibe 1 und ist mit zwei starren Klinken ausgestattet. Die Halteklinke 9 greift in der gezeigten Grundstellung in eine Zahnlücke der Haltezähne 2 ein, während die Fangklinke 10 sich außer Eingriff der Fangzähne 3 befindet. Die Halteklinke 9 hat ebenfalls eine Sägezahnkontur, die mit der Kontur der Haltezähne 2 abgestimmt ist. Die steile Flanke gewährleistet eine formschlüssige Fixierung der Zahnscheibe 1 in der Grundstellung und die flache Flanke erleichtert das Ausrücken des Schiebeteils 6, wenn in die Zahnscheibe 1 in Aufziehrichtung geschaltet wird.

Eingeleitet wird der Freigabevorgang mit dem Betätigungselement 11, indem der Schwenkhebel 12 um die Schwenkachse 13 schwenkt und eine Übertragungskontur am Betätigungselement 11 auf eine entsprechende Gegenfläche am Schiebeteil 1 wirkt. Die Gegenfläche am Schiebeteil 1 verläuft dabei senkrecht zur Zahnscheibenebene. Wird der Schwenkhebel 12 nach erfolgter Betätigung wieder freigegeben, so bringt eine Vorspannfeder, die sich am Gehäuseteil 5 abstützt, den Schwenkhebel 12 und eine Rückholfeder das Schiebeteil 6 in die Grundstellung zurück.

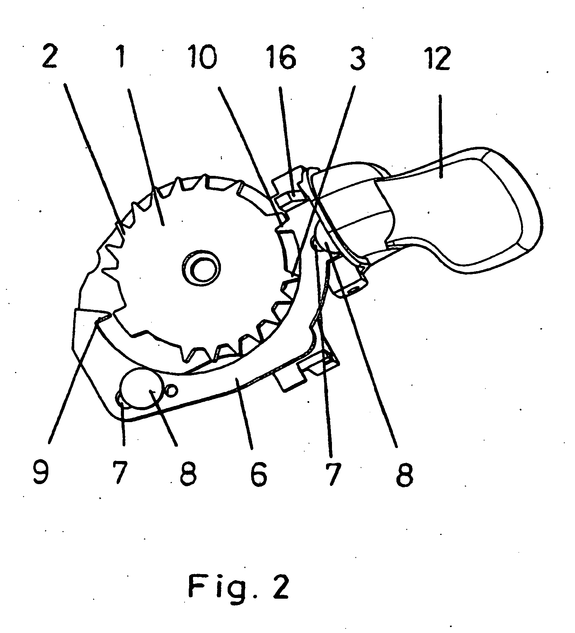

Fig. 2 zeigt den Freigabemechanismus in der Fangstellung. Hierbei liegt die Fangklinke 10 am entsprechenden Fangzahn 3 an und verhindert ein Verdrehen der Zahnscheibe 1. Der Schwenkhebel 12 befindet sich in der Betätigungsstellung und mittels der Übertragungskontur, die auf die Gegenfläche 16 am Schiebeteil 6 wirkt, wird die Halteklinke 9 aus dem Bereich der Haltezähne 2 heraus bewegt. Die Langlöcher 7 im Schiebeteil 6 und die Führungsbolzen 8 führen und begrenzen die Linearbewegung des Schiebeteils 6.

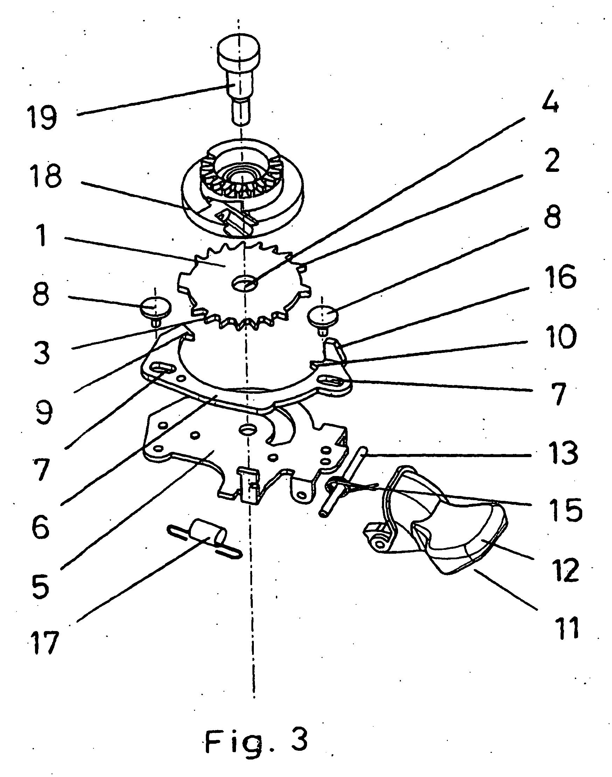

Fig. 3 zeigt die Explosionsdarstellung der Freigabevorrichtung mit ihren wesentlichen Bauteilen. Das Betätigungselement 11 mit Schwenkhebel 12 und Übertragungskontur 14 wird mittels der Schwenkachse 13 am Gehäuseteil 5 angelenkt. Die Vorspannfeder 15, die sich am Gehäuseteil 5 abstützt, hält das Betätigungselement 11 in der Grundstellung. Das Schiebeteil 6 umgreift die Zahnscheibe 1 und verfügt über eine starre Halteklinke 9 und eine starre Fangklinke 10, die je nach Stellung des Betätigungselementes 11 in die Halte- 2 bzw. Fangzähne 3 eingreifen. Mit einer Übertragungskontur am Betätigungselement 11 wird die Freigabebewegung des Betätigungselementes 11 über die Gegenfläche 16 in das Schiebeteil 6 eingeleitet. Die Führungsbolzen 8 werden im Gehäuseteil 5 fixiert und gewährleisten eine Linearbewegung des Schiebeteils 6 entlang der Langlochführung 7. Das Schiebeteil 6 wird mittels der Rückholfeder 17 in die Grundstellung zurückgeführt, wenn dies das Betätigungselement 11 erlaubt. Die Seilspule 18 ist drehfest mit der Zahnscheibe 1 verbunden und dreht um den Zentrierbolzen 19, der durch die Bohrung 4 der Zahnscheibe 1 verläuft und am Gehäuseteil 5 verankert ist.

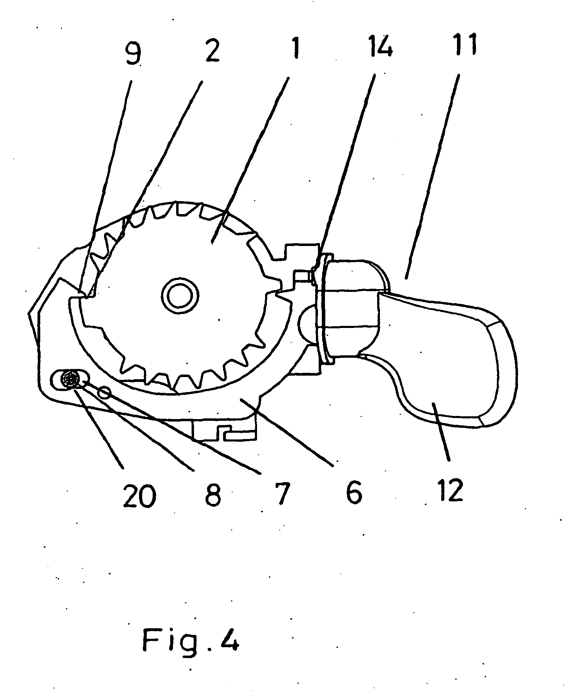

Fig. 4 zeigt den Freigabemechanismus in der Draufsicht. Der Schwenkhebel 12 ist noch nicht voll betätigt. Über die Übertragungskontur 14 am Betätigungselement 11, die auf die Gegenfläche wirkt, wird das Schiebeteil 6 verschoben. In der gezeigten Stellung ist die Halteklinke 9 am Haltezahn 2 schon teilweise ausgerückt. Durch die vom Seilzug vorgespannte Seilspule wird die Zahnscheibe 1 und damit auch die Halteklinke 9 bzw. das Schiebeteil 6 in Abwickelrichtung vorgespannt. Die Anlaufkontur 20 des Langloches der Langlochführung 7 ist so ausgebildet, dass das Schiebeteil 6 bei einer Verschiebung aus der Grundstellung heraus, entlang des Führungsbolzens 8 eine geringfügige Ausweichbewegung in Aufziehrichtung ausführt. Diese, durch die stufenförmige Anlaufkontur 20 erzwungene Ausweichbewegung gegen die Vorspannkraft des Seilzuges bzw. der Seilspule, führt somit zu einer höheren Betätigungskraft am Schwenkhebel 12. Es ergibt sich jedoch keine Rückwirkung auf die, in Aufziehrichtung erforderliche Betätigungskraft, da hierbei der Führungsbolzen 8 an der, der Anlaufkontur 20 gegenüberliegenden, annähernd gerade verlaufenden Kontur der Langlochführung 7 anliegt.

### Bezugszeichenliste

- 1: Zahnscheibe
- 2: Haltezahn
- 3: Fangzahn
- 4: Bohrung
- 5: Gehäuseteil
- 6: Schiebeteil
- 7: Langlochführung
- 8: Führungsbolzen
- 9: Halteklinke
- 10: Fangklinke
- 11: Betätigungselement
- 12: Schwenkhebel
- 13: Schwenkachse
- 14: Übertragungskontur
- 15: Vorspannfeder
- 16: Gegenfläche
- 17: Rückholfeder
- 18: Seilspule
- 19: Zentrierbolzen
- 20: Anlaufkontur

## Patentansprüche

1. Freigabemechanismus zur Freigabe eines Zugmittels zur Steuerung von Fahrradgetrieben, umfassend eine Seilspule (18) zum Aufwickeln des vorgespannten Schaltzuges, eine Auslösevorrichtung zum Fixieren bzw. Freigeben der durch den Schaltzug vorgespannten Seilspule (18) in Abwickelrichtung und ein Betätigungselement (11) zum Einleiten des Auslösevorganges sowie ein Gehäuseteil (5) zur Aufnahme und Führung der Bauteile,
wobei die Auslösevorrichtung im wesentlichen aus einer mit der Seilspule (18) verbundenen Zahnscheibe (1) und einem mit gegenüberliegenden Klinken (9,10) ausgestatteten Schiebeteil (6) gebildet wird und
wobei die Klinken (9,10) während des Auslösevorganges wechselweise am Umfang der Zahnscheibe (1) in Halte- (2) und Fangzähne (3) der Zahnscheibe (1) eingreifen, die jeweils in Umfangsrichtung der Zahnscheibe (1) etwa um 180 Grad versetzt am Umfang angeordnet sind.

2. Freigabemechanismus nach Anspruch 1,
**dadurch gekennzeichnet,**
**dass** das Schiebeteil (6) über mindestens eine starre Halte-(9) und Fangklinke (10) verfügt und federnd am Gehäuseteil (5) angelenkt ist, damit das Schiebeteil (6) aus der Fangstellung wieder in die Haltestellung zurückgeführt wird.

3. Freigabemechanismus nach Anspruch 1,
**dadurch gekennzeichnet,**
**dass** das Schiebeteil (6), insbesondere mit mindestens einer Langlochführung (7) am Gehäuseteil (5) geführt wird und eine annähernd lineare Bewegung in der Zahnscheibenebene oder parallel zur Zahnscheibenebene ausführt.

4. Freigabemechanismus nach Anspruch 1,
**dadurch gekennzeichnet,**
**dass** Mittel zur Erhöhung ausschliesslich der Auslösekraft unter Nutzung der Seilzugspannung vorgesehen sind.

5. Freigabemechanismus nach Anspruch 2 und Anspruch 4,
**dadurch gekennzeichnet,**
**dass** das Langloch einer Langlochführung (7) in der Nähe der Halteklinke (9) mit einer Anlaufkontur (20), vorzugsweise mit einer Schräge oder einer Stufe ausgestattet ist, die bei Verschiebung des Schiebeteils (6) aus der Grundstellung heraus die Halteklinke (9) geringfügig gegen die Seilspannung bewegt, wodurch sich die momentane Auslösekraft erhöht.

6. Freigabemechanismus nach Anspruch 1,
**dadurch gekennzeichnet,**
**dass** die Haltezähne (2) mit verschiedenen Zahnflanken ausgestattet sind, vorzugsweise eine Sägezahnkontur aufweisen.

7. Freigabemechanismus nach Anspruch 1,
**dadurch gekennzeichnet,**
**dass** die Freigabebewegung am Schiebeteil (6) mittels eines Betätigungselements (11) eingeleitet wird und dass am Betätigungselement (11) eine geeignete Übertragungskontur (14) und am Schiebeteil (6) eine entsprechende Gegenfläche (16) vorgesehen ist, die eine nahezu verschleißfreie Übertragung der Freigabebewegung gewährleisten.

8. Freigabemechanismus nach Anspruch 7,
**dadurch gekennzeichnet,**
**dass** die Übertragungskontur (14) und die Gegenfläche (16) im wesentlichen senkrecht zur Zahnscheibenebene angeordnet sind.

9. Freigabemechanismus nach Anspruch 7,
**dadurch gekennzeichnet,**
**dass** das Betätigungselement (11) um eine, vom Gehäuseteil (5) gestützte Schwenkachse (13) schwenkt, die vorzugsweise parallel zur Ebene der Zahnscheibe (1) verläuft.

10. Freigabemechanismus nach Anspruch 7,
**dadurch gekennzeichnet,**
**dass** das Betätigungselement (11) um eine, vom Gehäuseteil (5) gestützte Schwenkachse (13) schwenkt, die vorzugsweise senkrecht zur Zahnscheibenebene verläuft.

11. Freigabemechanismus nach den Ansprüchen 9 und 10,
**dadurch gekennzeichnet,**
**dass** die Schwenkbewegung des Betätigungselementes (11) mittels der Übertragungskontur (14) und einer Gegenfläche (16) in eine Linearbewegung des Schiebeteils (6) umgeformt wird.

12. Freigabemechanismus nach Anspruch 1,
**dadurch gekennzeichnet,**
**dass** das Betätigungselement (11) eine lineare Bewegung ausführt, die vorzugsweise annähernd parallel zur Zahnscheibenebene verläuft.

13. Freigabemechanismus nach den Ansprüchen 7 und 12,
**dadurch gekennzeichnet,**
**dass** Schiebeteil (6) und Betätigungselement (11) ein gemeinsames Bauteil bilden oder mit einem Scharnier verbunden sind.

14. Freigabemechanismus nach Anspruch 2,
**dadurch gekennzeichnet,**
**dass** das Schiebeteil (6) und die Rückholfeder (17) ein gemeinsames Bauteil bilden.

## Claims

1. Release mechanism for releasing a tensioning means for controlling bicycle gears comprising a coil (18) for winding the pretensioned gear, a triggering device for fixing or releasing the coil (18) pretensioned by the gear in winding direction and an actuating element (11) for initiating the triggering process and a housing part (5) for mounting and guiding the components, wherein the triggering device is formed essentially by a toothed gear (1) connected to the coil (18) and a shifting part (6) provided with opposite catches (9, 10), and wherein the catches (9, 10) during the triggering process engage alternately with the circumference of the toothed gear (1) in holding (2) and catching teeth (3), which are arranged respectively on the circumference offset by about 180 degrees in the circumferential direction of the toothed gear (1).

2. Release mechanism according to claim 1, **characterised in that** the shifting part (6) has at least one rigid holding (9) and catching catch (10) and is hinged in a spring-like manner onto the housing part (5), so that the shifting part (6) is returned from the catching position back into the holding position.

3. Release mechanism according to claim 1, **characterised in that** the shifting part (6) is guided, in particular with at least one elongated hole guide (7), on the housing part (5) and performs an almost linear movement in the toothed gear plane or parallel to the toothed gear plane.

4. Release mechanism according to claim 1, **characterised in that** means are provided for increasing solely the triggering force by using the cable traction.

5. Release mechanism according to claim 2 and claim 4, **characterised in that** the elongated hole of an elongated hole guide (7) in the vicinity of the holding catch (9) is provided with a run-on contour (20), preferably with a bevel or a step, which on the displacement of the shifting part (6) out of the base position moves the holding catch (9) slightly against the cable tension, whereby the actual triggering force is increased.

6. Release mechanism according to claim 1, **characterised in that** the holding teeth (2) are provided with different tooth sides, preferably having a sawtooth contour.

7. Release mechanism according to claim 1, **characterised in that** the release movement on the shifting part (6) is introduced by means of an actuating element (11), and **in that** on the actuating element (11) a suitable transfer contour (14) is provided and on the shifting part (6) a suitable counter surface (16) is provided, which ensure an almost wear-free transmission of the releasing movement.

8. Release mechanism according to claim 7, **characterised in that** the transfer contour (14) and the counter surface (16) are arranged to be essentially perpendicular to the toothed gear plane.

9. Release mechanism according to claim 7, **characterised in that** the actuating element (11) pivots about a pivot axis (13) supported by the housing part (5), which axis preferably runs parallel to the plane of the toothed gear (1).

10. Release mechanism according to claim 7, **characterised in that** the actuating element (11) pivots about a pivot axis (13) supported by the housing part (5), which preferably runs perpendicular to the toothed gear plane.

11. Release mechanism according to claims 9 and 10, **characterised in that** the pivoting movement of the actuating element (11) by means of the transfer contour (14) and a counter surface (16) is changed into a linear movement of the shifting part (6).

12. Release mechanism according to claim 1, **characterised in that** the actuating element (11) performs a linear movement, which preferably runs almost parallel to the toothed gear plane.

13. Release mechanism according to claims 7 and 12, **characterised in that** the shifting part (6) and actuating element (11) form a common component or are connected by a hinge.

14. Release mechanism according to claim 2, **characterised in that** the shifting part (6) and the return spring (17) form a common component.

## Revendications

1. Mécanisme de déblocage servant à débloquer un mécanisme de traction destiné à commander des transmissions de bicyclette, comportant une bobine de câble (18) servant à enrouler le câble de changement de vitesse précontraint, un dispositif de déclenchement servant à fixer et/ou à débloquer la bobine de câble (18) précontrainte par le câble de changement de vitesse dans le sens du déroulement, et un élément d'actionnement (11) servant à initier le processus de déclenchement ainsi qu'une pièce de boîtier (5) servant à recevoir et à guider les éléments,
le dispositif de déclenchement étant formé sensiblement par un disque denté (1) relié à la bobine de câble (18) et par une pièce coulissante (6) pourvue de cliquets (9, 10) se faisant face et
les cliquets (9, 10) venant en prise, pendants le processus de déclenchement, alternativement au niveau de la périphérie du disque denté, (1 ) avec des dents d'accrochage (2) et des dents d'arrêt (3) du disque denté (1), lesquelles dents sont respectivement disposées sur la périphérie de manière décalée d'environ 180 ° dans le sens de la périphérie du disque denté (1).

2. Mécanisme de déblocage selon la revendication 1,
**caractérisé en ce que**
que la pièce coulissante (6) dispose d'au moins un cliquet fixe d'accrochage (9) et d'un cliquet fixe d'arrêt (10) et est articulée de manière élastique au niveau de la pièce de boîtier (5) afin que la pièce coulissante (6) repasse de la position d'arrêt dans la position d'accrochage.

3. Mécanisme de déblocage selon la revendication 1,
**caractérisé en ce**
**que** la pièce coulissante (6) est guidée au niveau de la pièce de boîtier (5), en particulier avec au moins une glissière de guidage formant un trou oblong (7), et en ce qu'un mouvement approximativement linéaire est réalisé dans le plan du disque denté ou de manière parallèle par rapport à ce dernier.

4. Mécanisme de déblocage selon la revendication 1,
**caractérisé en ce**
**que** sont prévus des moyens servant à augmenter exclusivement la force de déclenchement moyennant l'utilisation de la contrainte de tension du câble.

5. Mécanisme de déblocage selon la revendication 2 ou la revendication 4,
**caractérisé en ce**
**que** le trou oblong d'une glissière de guidage formant un trou oblong (7) est pourvu à proximité du cliquet d'accrochage (9) d'un contour de démarrage (20), de préférence d'un chanfrein ou d'un étage, qui déplace faiblement contre la contrainte du câble, lors du coulissement de la pièce coulissante (6), le cliquet d'accrochage (9) hors de la position de base, ce qui permet d'augmenter la force de déclenchement instantanée.

6. Mécanisme de déblocage selon la revendication 1,
**caractérisé en ce**
**que** les dents d'accrochage (2) sont pourvues de différents profils de dent, présentent de préférence un contour en dents de scie.

7. Mécanisme de déblocage selon la revendication 1,
**caractérisé en ce**
**que** le mouvement de déblocage est initié au niveau de la pièce coulissante (6) au moyen d'un élément d'actionnement (11), et en ce qu'un contour de transmission (14) approprié est prévu sur l'élément d'actionnement (11) et qu'une contre-surface (16) correspondante est prévue sur la pièce coulissante (6), lesquels garantissent une transmission du mouvement de déblocage quasiment sans usure.

8. Mécanisme de déblocage selon la revendication 7,
**caractérisé en ce**
**que** le contour de transmission (14) et la contre-surface (16) sont disposés sensiblement de manière perpendiculaire par rapport au plan du disque denté.

9. Mécanisme de déblocage selon la revendication 7,
**caractérisé en ce**
**que** l'élément d'actionnement (11) pivote autour d'un axe de pivotement (13) soutenu par la pièce de boîtier (5), lequel axe de pivotement s'étend de préférence de manière parallèle par rapport au plan du disque denté (1).

10. Mécanisme de déblocage selon la revendication 7,
**caractérisé en ce**
**que** l'élément d'actionnement (11) pivote autour d'un axe de pivotement (13) soutenu par la pièce de boîtier (5), lequel axe de pivotement s'étend de préférence de manière perpendiculaire par rapport au plan du disque denté.

11. Mécanisme de déblocage selon les revendications 9 et 10,
**caractérisé en ce**
**que** le mouvement de pivotement de l'élément d'actionnement (11) est transformé en un mouvement linéaire de la pièce coulissante (6) au moyen du contour de transmission (14) et d'une contre-surface (16).

12. Mécanisme de déblocage selon la revendication 1,
**caractérisé en ce**
**que** l'élément d'actionnement (11) réalise un mouvement linéaire qui s'étend de préférence approximativement de manière parallèle par rapport au plan du disque denté.

13. Mécanisme de déblocage selon les revendications 7 et 12,
**caractérisé en ce**
**que** la pièce coulissante (6) et l'élément d'actionnement (11) forment un élément commun ou sont reliés à une charnière.

14. Mécanisme de déblocage selon la revendication 2,
**caractérisé en ce**
**que** la pièce coulissante (6) et le ressort de rappel (17) forment un élément commun.
